# EUROPEAN PATENT APPLICATION

(11) **EP 4 342 595 A1**
(43) Date of publication of application: **27.03.2024**
(21) Application number: 22197161.7
(22) Date of filing: 22.09.2022
(51) Int. Cl.: B08B 3/02, B08B 9/08, B08B 9/093, B08B 9/032, B05B 13/06, B08B 3/04, B61D 35/00, B64D 11/02, B08B 3/08

(54) **SYSTEM AND METHOD FOR CLEANING A WASTE TANK IN AN AIRCRAFT**

(71) Applicant: Airbus Operations GmbH, 21129 Hamburg (DE)
(72) Inventor: Ohlfest, Carsten, 21129 Hamburg (DE); Glage, Kay, 21129 Hamburg (DE); Kluge, Sygrun, 21129 Hamburg (DE)

(57) **Abstract**

A system for cleaning a waste tank (4) in an aircraft is proposed, comprising a service device (8), at least one spray nozzle, and a first adaptor (12) for each of the at least one spray nozzle, wherein the service device comprises a descaling fluid tank (14), a service device outlet, a service device inlet and a pump in fluid communication with the service device outlet, wherein the at least one spray nozzle is coupled with the service device outlet or the pump through a first conduit (30), wherein the at least one spray nozzle is adapted for ejecting at least one descaling fluid jet into the waste tank, wherein the service device inlet is coupled with a second conduit (38) attachable to a waste tank outlet, wherein the first adaptor is couplable with the respective spray nozzle and comprises fastening means to attach the first adaptor to an opening of the waste tank in a substantially fluid-tight manner, and wherein the service device is designed to continuously circulate the descaling fluid through the service device outlet, the first conduit, the at least one spray nozzle, the waste tank outlet, the second conduit and the service device inlet.

## Description

### Technical field

The invention relates to a system and a method for cleaning a waste tank in an aircraft.

### Background of the invention

In commercial aircraft designed for transporting passengers, usually a plurality of installations are provided for increasing the personal passenger comfort. These include the mandatory feature in form of toilets/lavatories, which require a water supply tank for rinsing water, and a waste tank. The waste tank will frequently be emptied by opening an outlet and suctioning or pressing the contents of the waste tank to an exterior disposal facility. During maintenance operations, the waste tank is usually manually cleaned by using high-pressure water jet devices that remove residuals from the interior surface of the waste tank. However, a hard layer of residuals and/or scale may remain, which may impair a correct function of a waste water tank fill sensor or the like. The manual cleaning process poses a health and injury risk on workers. In addition, manually cleaning an interior of a waste tank is cumbersome due to the cramped space of the waste tank and its installation space.

### Summary of the invention

It is thus an object of the invention to provide a cleaning method or cleaning device or the like that is capable of cleaning such a waste tank completely, preferably with reduced manual labor, a clearly reduced health and injury risk, preferably with reducing or eliminating the risk of a false operation of a waste water tank fill sensor and with increased efficiency.

The object of the invention is met by a system for cleaning a waste tank in an aircraft having the features according to claim 1. Advantageous embodiments and further improvements may be gathered from the subclaims and the following description.

A system for cleaning a waste tank in an aircraft is proposed, comprising a service device, at least one spray nozzle having a spray nozzle head and a spray nozzle inlet, and a first adaptor for each of the at least one spray nozzle, wherein the service device comprises a descaling fluid tank, a service device outlet, a service device inlet and a pump in fluid communication with the service device outlet, wherein the at least one spray nozzle is coupled with the service device outlet or the pump through a first conduit, wherein the at least one spray nozzle is adapted for ejecting at least one descaling fluid jet into the waste tank, wherein the service device inlet is coupled with a second conduit attachable to a waste tank outlet, wherein the first adaptor is couplable with the respective spray nozzle and comprises fastening means to attach the first adaptor to an opening of the waste tank in a substantially fluid-tight manner, and wherein the service device is designed to continuously circulate the descaling fluid through the service device outlet, the first conduit, the at least one spray nozzle, the waste tank outlet, the second conduit and the service device inlet.

The dimensions and shape of the waste tank may vary according to the respective aircraft type and configuration. The waste tank may comprise a cylindrical shape with rounded ends. As an alternative, it may have a tapered, conical shape. A combination of these shapes is also possible. The waste tank is often arranged with a longitudinal axis being aligned substantially horizontally or enclosing an angle of 30° or less with a horizontal axis.

Often, a waste tank comprises one or a plurality of waste tank inlets for introducing waste into the waste tank, e.g. from a lavatory. The waste tank inlets are usually arranged on an upper part of the waste tank. Furthermore, a filter, a filter cap, revision covers and other parts are often arranged on the waste tank. These fittings are usually connected to a dedicated opening and may be removed for maintenance, replacement, modifications, or upgrades.

A gist of the invention lies in providing at least one and preferably a plurality of spray nozzles that are temporarily connectable to openings of the waste tank in a way that they reach into the interior of the waste tank to continuously eject a descaling fluid in the form of fluid jets into the waste tank. Preferably, the at least one spray nozzle is adapted to provide a plurality of fluid jets that are directed onto an interior surface of the waste tank, such that at least a major part of the interior surface of the waste tank will be impinged. By continuously ejecting fluid jets onto the interior surface of the waste tank, residuals and scale are partly solved or etched, thereby at least partly removed from the interior surface, and washed away. The fluid jets thus subsequently remove residuals and scale layer by layer, leading to a complete cleaning of the interior surface.

The service device contains a sufficiently large amount of descaling fluid that is circulated between the service device and the waste tank. It may circulate for a predetermined amount of time sufficient for cleaning the interior surface in a way that all residuals and scale are removed. In doing so, they are washed away from the interior surface and are entrained by the circulating descaling fluid. When using a sufficiently large amount of descaling fluid, the chemical activity of the descaling fluid is hardly reduced by the entrained residuals and scale, such that substantially during the whole time of circulation, the descaling fluid removes residuals and scale.

The service device may be a mobile platform that can be moved to the respective aircraft and that may be arrested in a desired position. The service device may then be connected to the waste tank outlet and the respective opening to introduce the at least one spray nozzle. All fittings, i.e. waste tank inlets, filters, revision covers or the like should be removed. At least one of the resulting openings will be equipped with a spray nozzle. Openings, that are not required for the cleaning process may be covered by suitable covering parts. By attaching at least one spray nozzle to a respective opening, covering parts to remaining openings and the service device inlet to the waste tank outlet, a closed circuit is provided. The pump is then able to pump the descaling fluid to the service device outlet, to which the at least one spray nozzle is connected. The descaling fluid collects at a bottom side of the waste tank and reaches the waste tank outlet to be pumped to the service device outlet again.

The at least one spray nozzle may comprise a spray nozzle head, which is inserted into the interior of the waste tank. For this, the spray nozzle head may be connected to a tube or pipe, which protrudes into the waste tank. The respective spray nozzle will be coupled with an already-present opening of the waste tank, to which a revision cover, a filter, a waste inlet, or another fitting is connected otherwise. To attach the spray nozzle to the respective opening, the first adaptor is used. The first adaptor comprises a shape that conforms the size and shape of the opening as well as of the respective spray nozzle. The system according to the invention thus allows to be used for a plurality of different types of aircraft and/or differently designed waste tanks by simply using a suitable set of first adaptors.

Resultantly, the system according to the invention provides a simple and efficient way of cleaning a waste tank to remove residuals and scale. Fill sensors and other equipment of the waste tank can thus be thoroughly cleaned and maintained and need to be replaced less frequently. The system can be operated autonomously and does not pose any health or injury risk on workers. The cleaning process is, however, much more efficient than manual cleaning processes. Furthermore, in particular when using citric acid as a descaling fluid, the waste is not hazardous. Due to the self-sufficient operation of the system, the ergonomics is greatly improved.

In an advantageous embodiment, the first adaptor comprises a plate having a central through-hole, wherein the respective spray nozzle comprises a tube having a first end and a second end, the tube reaching through the through-hole, wherein the spray nozzle head is arranged on the first end, and wherein a coupling is arranged on the second end. The tube may be welded to one of the sides of the plate and may end there. By combining the tube and the plate, a fluid communication from outside the plate to an interior space of the waste tank, where the spray nozzle is held, can be provided. The first adaptor can be attached to a surface of the waste tank that surrounds a respective opening, in order to hold the tube in the opening. The first end is placed in the interior if the waste tank and the second end is placed at the outer side of the waste tank, where the coupling is accessible to be connected to the first conduit. By choosing the length of the tube, the first end can be placed in a desired position inside the waste tank. The descaling fluid can be routed to the spray nozzle head through the tube. A sealing device can be arranged between the first adaptor and the respective surface of the waste tank to provide a fluid-tight attachment. However, the first adaptor and/or a surrounding surface of the respective opening may already include such a sealing device. The first adaptor of the spray nozzle should have the same design as a flange for a revision cover or another fitting of the waste tank and may thus comprise the same thickness, the same screw holes etc., in order to re-use existing screw holes and screws. The first adaptor may be made from a metallic material and in particular a stainless steel or a metallic material coated or treated with a substance that prevents corrosion.

The first adaptor is designed to enable the attachment of the at least one spray nozzle to virtually any waste tank opening through adapting the design and dimensions of the plate to the respective waste tank opening. Thus, a plurality of various waste tanks can be cleaned by the system according to the invention.

In analogy to this, at least one second adapter may be provided, which is adapted to the size of the respective waste tank outlet.

In an advantageous embodiment, the spray nozzle is designed to hold the spray nozzle head in a distance to the respective opening in the interior of the waste tank. Depending on the overall design of the spray nozzle head, the cleaning process may require a certain minimum and/or maximum distance to an interior surface of the waste tank. The tube length can be chosen to place the spray nozzle head in a position range that supports the cleaning process by the particular spray nozzle head.

In an advantageous embodiment, the spray nozzle head comprises a plurality of spray openings with a plurality of different ejection angles. The spray openings comprise a size and alignment that lead to the formation of a plurality of descaling fluid jets that exit the spray nozzle head and travel through the interior of the waste tank to impinge on its interior surface. Providing a plurality of spray openings on the spray nozzle head with different ejection angles in at least two and preferably three spatial directions, the spray nozzle head of the at least one spray nozzle allows to reach substantially the whole interior surface to be cleaned.

In an advantageous embodiment, the spray nozzle head is actively rotatable. The spray nozzle head may preferably rotate by the supply of the descaling fluid through the tube. This may be achieved by a certain design of the spray nozzle head. For example, the spray nozzle head may be rotatably supported on the tube. Inside the spray nozzle head, a turbine may be provided, which rotates through the flow of the descaling fluid. As an alternative, the spray openings of the spray nozzle head may have a spray opening axis that is oblique to a radius line, such that the ejected descaling fluid jets generate a moment that drives the spray nozzle head to rotate about the rotational axis. Both principles may be used in combination. A rotating spray nozzle head leads to an improved wetting of the interior surface of the waste tank. A reduced number of spray openings may then be used, which also generate stronger fluid jets when the flow rate of the descaling fluid is the same as with more spray openings.

In an advantageous embodiment, the service device further comprises a receptacle for receiving fittings, wherein the receptacle is removably arranged inside the descaling fluid tank. The fittings may include waste inlets, filters, revision covers, sealings, fastening elements and other components that are usually attached to an outer surface of the waste tank during its normal operation. By placing the fittings into the receptacle, they can be cleaned inside the descaling fluid tank during the cleaning process. Due to the continuous flow of the descaling fluid, the receptacle can be filled and/or flown through by the descaling fluid and act onto the respective fittings.

In an advantageous embodiment, the receptacle comprises a box having a lattice structure, through which the descaling fluid can flow. For example, the box may resemble a cage, which is easily flown through by the descaling fluid. During the cleaning process, scale and residuals on the fittings will then be removed layer by layer.

In an advantageous embodiment, the service device additionally comprises a fresh water tank, wherein the service device comprises a first valve adapted for selectively routing the descaling fluid from the descaling fluid tank or fresh water from the fresh water tank to the service device outlet. The first valve may be a three-way-valve, which can be switched between a first position, a second position and a neutral position. In the first position, descaling fluid may be routed to the service device outlet. In the second position, fresh water may be routed to the service device outlet. In the neutral position, neither descaling fluid nor fresh water will be provided. The first valve may be arranged upstream of the pump mentioned above.

In an advantageous embodiment, the system further comprises a control unit coupled with the pump, wherein the control unit is adapted to continuously operate the pump for a predetermined amount of time. The control unit allows to control at least the length of the whole cleaning process .For example, a predetermined cleaning time may be set and the control unit operates the pump during the predetermined cleaning time. Furthermore, the control unit may be coupled with the above-mentioned first valve to provide the descaling fluid during a first amount of time, and afterwards fresh water during a second amount of time for rinsing the water tank. In addition, fill sensors may be provided to monitor the fill level of the descaling fluid tank and the freshwater tank and a second valve, which allows or interrupts filling of both tanks, may be controlled by the control unit as well. It is preferred that the control unit enables a completely self-sufficient, autonomous cleaning process, without the need for manual interaction, after all required connections to the waste tank are made.

In an advantageous embodiment, the service device further comprises at least one clogging sensor connected to the control unit, wherein the control unit is adapted to interrupt the operation of the pump upon a clogging signal from the at least one clogging sensor. The control unit thus provides a safety feature to stop the cleaning process when excessive filter clogging is detected. Besides that, also one or a plurality of pressure sensors may be provided to monitor the pressure of fluid inlets or outlets. By monitoring pressures, flow rates, clogging states and/or other parameters, the control unit provides a safe and reliable cleaning process and damages to any part of the system or the waste tank can be prevented.

In an advantageous embodiment, the descaling fluid tank comprises a citric acid solution. The descaling fluid tank may thus be filled with fresh water and citric acid in powdery form may be added to create the desired solution. It is advantageous to provide a 2 to 10% citric acid solution and preferably about 5%. However, the invention does not rule out the use of alternative descaling fluids.

The descaling fluid may comprise a slightly elevated temperature, for example up to 45°C. Prior to starting the cleaning process, the system may be adapted to preheat the descaling fluid.

In an advantageous embodiment, the service device comprises a mobile platform having wheels for moving the service device to a desired operating position. The service device may comprise a housing enclosing the descaling fluid tank and the freshwater tank, which are placed on the mobile platform. All additional components, such as control unit, pump, valves and quick connectors or the like are preferably included in the mobile device, such that the service device may simply be moved to the aircraft and be operated by plugging it into a power source and connecting the conduits to it.

The invention further relates to a method for cleaning a waste tank in an aircraft, comprising the steps of attaching at least one spray nozzle having a spray nozzle head and a spray nozzle inlet to an opening of the waste tank in a substantially fluid-tight manner by means of a first adaptor; coupling the at least one spray nozzle to a service device outlet of a service device or a pump, which is in fluid communication with the service device outlet, through a first conduit; coupling a service device inlet to a waste tank outlet through a second conduit; continuously circulating a descaling fluid through the service device outlet, the first conduit, the at least one spray nozzle, the waste tank outlet, the second conduit and the service device inlet by supplying the descaling fluid from a descaling fluid tank of the service device into the waste tank through the at least one spray nozzle and receiving descaling fluid from the waste tank outlet and feeding it into the descaling fluid tank; wherein the at least one spray nozzle head is adapted for ejecting at least one descaling fluid jet into the waste tank.

In an advantageous embodiment, the method comprises removing fittings from the waste tank as a preparatory step; placing the fittings into a receptacle; and placing the receptacle into the interior of the descaling fluid tank.

In an advantageous embodiment, the method further comprises interrupting the circulation of descaling fluid after a predetermined amount of time, supplying fresh water from a freshwater tank into the waste tank; and receiving resulting rinsing water from the waste tank outlet and feeding it into the descaling fluid tank.

### Brief description of the figures

In the following, the attached drawings are used to illustrate exemplary embodiments in more detail. The illustrations are schematic and not to scale. Identical reference numerals refer to identical or similar elements. They show:
Fig. 1 shows a schematic illustration of a system for cleaning a waste tank as well as a waste tank in an aircraft.
Fig. 2 shows a three-dimensional view of a spray nozzle.
Fig. 3 to 9 show the waste tank 4 in different views in different installation steps of spray nozzles.
Fig. 10 shows a receptacle insertable into the descaling fluid tank in a schematic view.

### Detailed description of exemplary embodiments

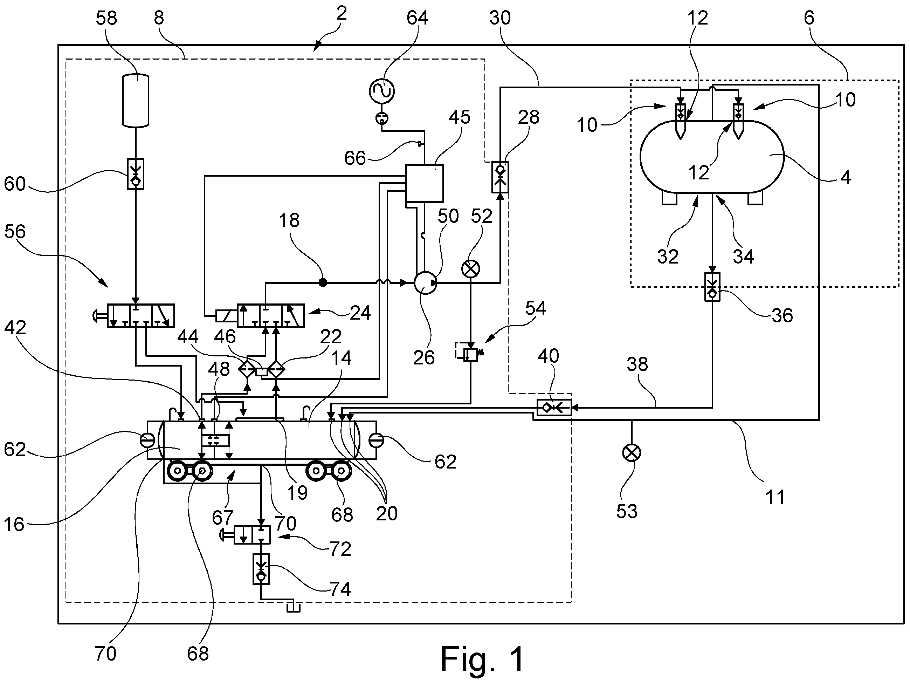

Fig. 1 shows a system 2 for cleaning waste tank 4 in an aircraft 6. The system 2 comprises a service device 8, exemplarily two spray nozzles 10 and a first adaptor 12 for each of the spray nozzles 10. The service device 8 comprises a descaling fluid tank 14 and a freshwater tank 16. A service device outlet 18 as well as exemplarily two service device inlets 20 are provided.

A descaling fluid outlet 19 is connected to a first filter 22, followed by a first valve 24, which is exemplarily realized in the form of a three-way-valve and leads to the service device outlet 18, which is connected to a pump 26. In this illustration, the first valve 24 is in a neutral state, in which the pump 26 is not in fluid communication with any fluid source. When switching the first valve 24 into a first position, the first filter 22 is brought into a fluid communication with the pump 26. In the schematic drawing of fig. 1, the first valve 24 will be switched to the left hand side in order to reach the first position. As explained further below, switching the first valve 24 to the right hand side leads to a second position. Between the first and second position, the neutral position of the first valve 24 is situated.

Downstream of the pump 26, a first quick coupling 28 is provided, to which a first conduit 30 is connected. The first conduit 30 is connected to both spray nozzles 10, such that a descaling fluid can be pumped from the descaling fluid tank 14 into the waste tank 4, when the first valve 24 is in the first position. The descaling fluid that enters the waste tank 4 preferably impinges onto an inner surface of the waste tank 4, such that the descaling fluid actively descales the interior surface and flows down to a bottom side 32 of the waste tank 4. Here, a waste tank outlet 34 is provided, which is connected to a second quick coupling 36, to which a second conduit 38 is connected that in turn is coupled with a third quick connector 40, which leads to one of the service device inlets 20. Descaling fluid that is pumped into the waste tank 4 thus descales and cleans the waste tank interior and flows back to the descaling fluid tank 14. Here, it reaches the pump 26 again and is thus continuously circulated between the descaling fluid tank 14 and the waste tank 4.

The freshwater tank 16 comprises a freshwater outlet 42, which is connected to a second filter 44 that in turn is connected to the first valve 24. By switching the first valve 24 into the second position, water from the freshwater tank 16 is routed to the pump 26, which allows the system 2 to rinse the waste tank 4. Water, that flows into the waste tank 4 exits the waste tank 4 at the waste tank outlet 34 and flows into the descaling fluid tank 14. The descaling fluid tank 14 is dimensioned to carry a sufficient amount of the descaling fluid and allows to receive all rinsing water. For the sake of safe design, the descaling fluid tank 14 comprises an additional buffer volume. For example, the descaling fluid tank 14 may have a volume of 750 I and may be filled with an initial volume of 500 I of descaling fluid. The freshwater tank 16 may comprise a volume capable of storing 150 I of fresh water. The descaling fluid tank 14 may thus have a buffer volume of 100 I as a safety tolerance.

For the sake of clarity it is stressed that the first filter 22 and the second filter 44 are to be understood as any device that is capable of separating solids from the descaling fluid to filter the descaling fluid. The filters may be realized by one or a plurality of various different types of filtering devices.

A control unit 45 is connected to the pump 26, a filter clogging sensor 46, a fill-sensor arrangement 48 for sensing fill levels of the descaling fluid tank 14 and the freshwater tank 16, as well as the first valve 24. The control unit 45 is capable of operating the pump 26, selecting a fluid source through operating the first valve 24 and monitoring fill levels and potential clogging events. Preferably, the control unit 45 is adapted for continuously circulating descaling fluid from the descaling fluid tank 14 through the waste tank 4 and, after a predetermined amount of time, rinsing the waste tank 4 with fresh water through switching the first valve 24 from the first position into the second position. Afterwards, the process of cleaning the waste tank 4 can be stopped by switching the valve 24 into the neutral position and stopping the pump 26.

Downstream a pump outlet 50, a pressure sensor 52 may be provided, which may influence the control of the pump 26 or which interrupts the operation of the pump 26 in case of an overpressure. Furthermore, a pressure relief valve 54, which is arranged downstream of the pump outlet 50 and which is connected to one of the service device inlets 20, allows to limit the maximum pressure in the first conduit 30.

For filling the freshwater tank 16 and the descaling fluids tank 14, a second valve 56 is provided, which is connected to an external freshwater tank 58. By switching the second valve 56 into a first position, i.e. by moving the second valve 56 to the left-hand side in this schematic illustration, water is supplied into the descaling fluid tank 14. After reaching a certain fill volume, a descaling agent, such as citric acid, can be added. For example, the descaling fluid is a 5% solution of citric acid. By switching the second valve 56 into the second position, the freshwater tank 16 can be filled. A fourth quick connector 60 is provided, which allows to couple the service device 8 with the external freshwater tank 58.

Exemplarily, both the freshwater tank 16 and the descaling fluid tank 14 comprise an individual visual level indicator 62 for simplifying the filling process before operating the system 2. The service device 8 may be connected to a power source 64, which may be an AC power source, and may simply be switched on through a switch 66. Preferably, the service device 8 is provided as a self-contained unit and may comprise a mobile platform 67 having wheels 68 to move it to the aircraft 6 in a convenient manner.

For emptying the descaling fluid tank 14 after the cleaning process, as well as the freshwater tank 16 when desired, drains 70 are provided, which are connected to a directly downstream drain valve 72, which leads to a drain port 74. After cleaning the waste tank 4, the fluids contained in both tanks 14 and 16 of the service device 8 can easily be disposed of.

An additional vent line 11 is provided, which is connected to the waste tank 4 exemplarily in an upper region of the waste tank 4. The vent line 11 is connected to an additional service device inlet 20 and allows to route air and fluids and other substances entrained therein into the descaling fluid tank 14. An overpressure inside the waste tank 4 is prevented. An additional pressure sensor 53 is connected to the vent line 11 and is connected to the control unit 45. The control unit 45 is thus capable of detecting an excessive pressure in the vent line 11 and of interrupting the operation of the system 2 in such a case.

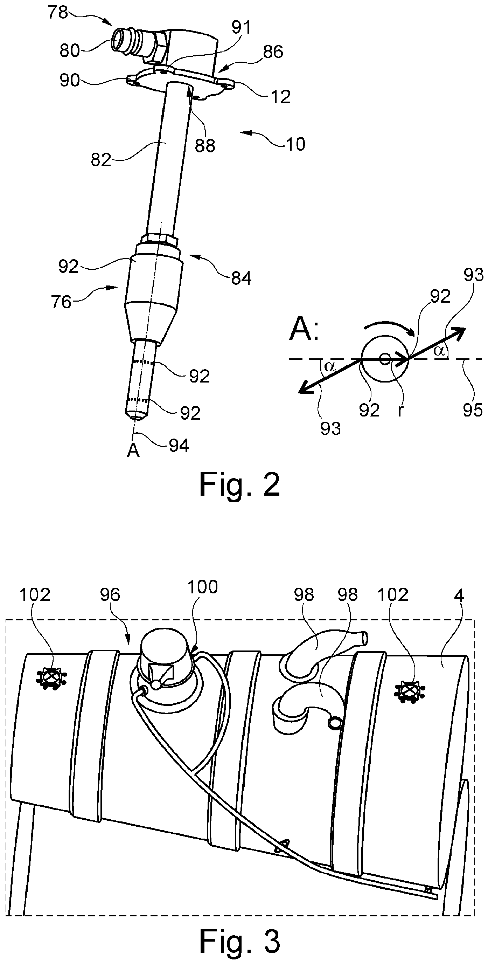

Fig. 2 shows a spray nozzle 10, which comprises a spray nozzle head 76 and a spray nozzle inlet 78. The spray nozzle inlet 78 comprises a coupling 80, which can be coupled to the first conduit 30. The spray nozzle inlet 78 is connected to a tube 82, which in turn is connected to the spray nozzle head 76. While the spray nozzle head 76 is arranged on a first end 84 of the tube 82, the spray nozzle inlet 78 is arranged on a second end 86 of the tube 82. The tube 82 reaches through a through-hole 88 of the first adaptor 12, to which the coupling 80 is connected. The first adaptor 12 comprises a plate 90, which comprises a plurality of screw holes 91, which are distributed on the plate 90. The size and shape of the plate 90 conforms the shape and size of openings, to which the first adaptor 12 is to be attached. Fastening the first adaptor 12 to a surrounding surface of such an opening of the waste tank 4 positions the spray nozzle head 76 in a desired position. This will be explained further below.

The spray nozzle head 76 comprises a plurality of spray openings 92, which are distributed over the spray nozzle head 76, which lead to the ejection of fluid jets in different spatial directions. The spray openings 92 are exemplarily shown on two circumferential lines that extend over 360° about a rotational axis 94. However, less and more spray openings 92 may be possible.

Exemplarily, the spray nozzle head 76 may be rotatable about the rotational axis 94, such that a plurality of fluid jets are ejected on several circulating paths. A distance between the first adaptor 12 and the spray nozzle head 76 can be selected depending on the size and shape of the waste tank 4 as well as on the desired position of the spray nozzle head 76 inside the interior of the waste tank 4.

As illustrated in detail A, the spray openings 92 may comprise an opening axis 93, which is oblique to a radial line 95, i.e. an angle α between the radial line 95 and the opening axis 93 in a plane perpendicular to the rotational axis 94 is greater or smaller than zero. This allows the nozzle head 76 to rotate if it is rotatably supported. However, this is merely an example and the respective angle α may also be zero.

Fig. 3 shows the waste tank 4 having a tapered shape. Exemplarily, a narrower end is be placed rearward a broader end in the fuselage of the respective aircraft 6. On a top surface 96, several fittings in the form of two waste inlets 98, a filter 100 and two revision covers 102 are provided.

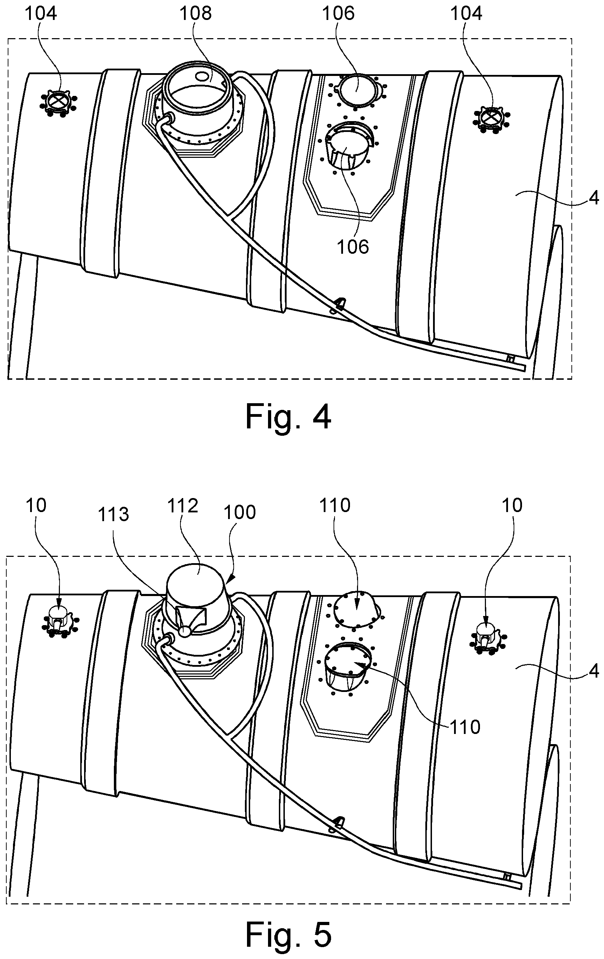

These fittings 98 to 102 can be removed in order to release waste tank openings 104, 106, and 108, as shown in fig. 4.

In fig. 5, two spray nozzles 10 are attached to the waste tank 4 and use both openings 104, which were previously covered by the revision covers 102. The openings 106, which were previously connected to the waste inlets 98, are now covered by blind covers 110. A cap 112 closes the opening 108, which previously carried the filter 100. The cap 112 comprises a flange 113, to which the vent line 11 may be connected, as explained with fig. 1.

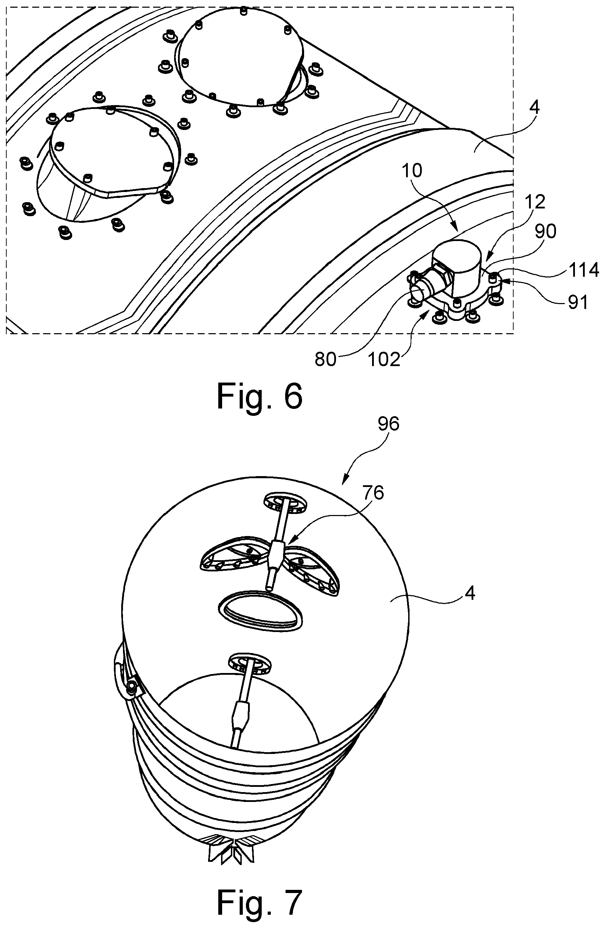

As apparent from fig. 6, the first adaptor 12 and particularly the plate 90 is designed in a way that the waste tank openings 102 can simply be equipped with the spray nozzle 10. Screws 114 can be screwed through the screw holes 91 into threads that were previously used for fastening the revision covers 102. Here, the coupling 80 is placed on top of the waste tank 4 and is ready for connection to the first conduit 30.

Fig. 7 demonstrates the position of the spray nozzle head 76 inside the waste tank 4. Here, they comprise a predetermined distance to the top surface 96 to improve the cleaning action.

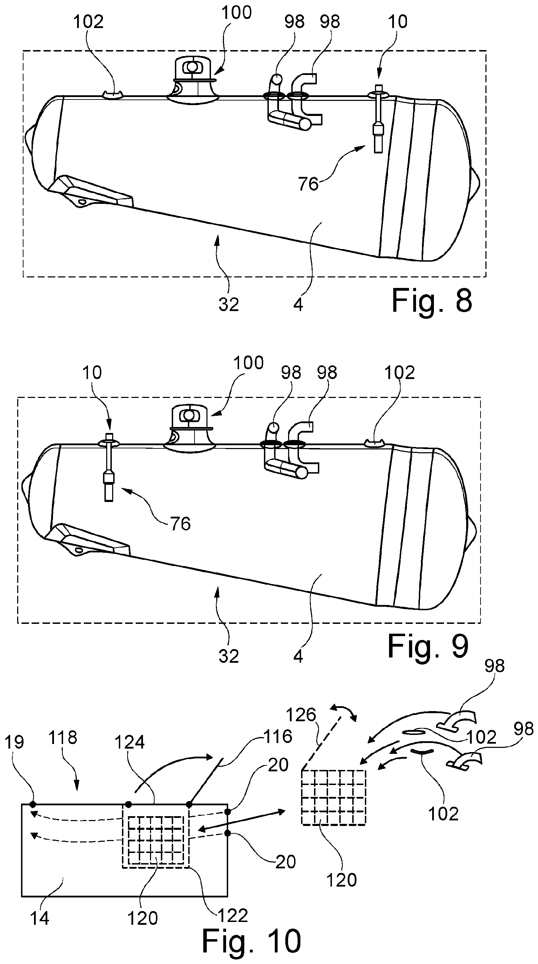

Fig. 8 and 9 show different cleaning positions, i.e. one spray nozzle 10 arranged in a forward position (fig. 8) and one spray nozzle 10 arranged in the rearward cleaning position (fig. 9).

Fig. 10 shows a schematical illustration of the descaling fluid tank 14 having a lid 116 at a top side 118, through which a receptacle 120 in the form of a cage or basket can be inserted into the descaling fluid tank 14. In the interior of the descaling fluid tank 14, a holding frame 122 is exemplarily provided, which is arranged underneath a cutout 124 that is sealably closable by the lid 116. The receptacle 120 itself may also comprise a cover 126, which is openable to insert or remove fittings such as revision covers 102 and waste tank inlets 98. By providing the descaling fluid tank outlet 19 and the inlets 20 at opposed sides of the descaling fluid tank 14, the receptacle 120 can be flown through in order to clean the fittings arranged therein during the cleaning process of the waste tank 4.

Reference numerals
- 2: System
- 4: waste tank
- 6: aircraft
- 8: service device
- 10: spray nozzle
- 11: vent line
- 12: first adaptor
- 14: descaling fluid tank
- 16: freshwater tank
- 18: service device outlet
- 19: descaling fluid outlet
- 20: service device inlet
- 22: first filter
- 24: first valve
- 26: pump
- 28: first quick coupling
- 30: first conduit
- 32: bottom side
- 34: waste tank outlet
- 36: second quick coupling
- 38: second conduit
- 40: third quick connector
- 42: freshwater outlet
- 44: second filter
- 45: control unit
- 46: filter clogging sensor
- 48: fill-sensor arrangement
- 50: pump outlet
- 52: pressure sensor
- 53: pressure sensor
- 54: pressure relief valve
- 56: second valve
- 58: external freshwater tank
- 60: fourth quick connector
- 62: visual level indicator
- 64: power source
- 66: switch
- 67: mobile platform
- 68: wheel
- 70: drain
- 72: drain valve
- 74: drain port
- 76: spray nozzle head
- 78: spray nozzle inlet
- 80: coupling
- 82: tube
- 84: first end
- 86: second end
- 88: through-hole
- 90: plate of first adaptor
- 91: screw hole
- 92: spray nozzle opening
- 93: opening axis
- 94: rotational axis
- 95: radial line
- 96: top surface
- 98: waste inlet
- 100: filter
- 102: revision cover
- 104: waste tank opening
- 106: waste tank opening
- 108: waste tank opening
- 110: blind cover
- 112: cap
- 113: flange
- 114: screw
- 116: lid
- 118: top side
- 120: receptacle
- 122: holding frame
- 124: cutout

## Claims

1. System (2) for cleaning a waste tank (4) in an aircraft, comprising:
a service device (8),
at least one spray nozzle (10) having a spray nozzle head (76) and a spray nozzle inlet (78), and
a first adaptor (12) for each of the at least one spray nozzle (10),
wherein the service device (8) comprises a descaling fluid tank (14), a service device outlet (18), a service device inlet (20) and a pump (26) in fluid communication with the service device outlet (18),
wherein the at least one spray nozzle (10) is coupled with the service device outlet (18) or the pump (26) through a first conduit (30),
wherein the at least one spray nozzle head (76) is adapted for ejecting at least one descaling fluid jet into the waste tank (4),
wherein the service device inlet (20) is coupled with a second conduit (38) attachable to a waste tank outlet (34),
wherein the first adaptor (12) is couplable with the respective spray nozzle (10) and comprises fastening means to attach the first adaptor (12) to an opening (104, 106, 108) of the waste tank (4) in a substantially fluid-tight manner, and
wherein the service device (8) is designed to continuously circulate the descaling fluid through the service device outlet (18), the first conduit (30), the at least one spray nozzle (10), the waste tank outlet (34), the second conduit (38) and the service device inlet (20).

2. System (2) of claim 1,
wherein the first adaptor (12) comprises a plate (90) having a central through-hole (88),
wherein the respective spray nozzle (10) comprises a tube (82) having a first end (84) and a second end (86), the tube (82) reaching through the through-hole (88),
wherein the spray nozzle head (76) is arranged on the first end (84), and
wherein a coupling (80) is arranged on the second end (86).

3. System (2) of claim 1 or 2,
wherein the spray nozzle (10) is designed to hold the spray nozzle head (76) in a distance to the respective opening (104, 106, 108) in the interior of the waste tank (4).

4. System (2) of any of the preceding claims,
wherein the spray nozzle head (76) is actively rotatable.

5. System (2) of any of the preceding claims,
wherein the spray nozzle head (76) comprises a plurality of spray openings (92) with a plurality of different ejection angles.

6. System (2) of any of the preceding claims,
wherein the service device (8) further comprises a receptacle (120) for receiving fittings (98, 102), and
wherein the receptacle (120) is removably arrangeable inside the descaling fluid tank (14).

7. System (2) of claim 6,
wherein the receptacle (120) comprises a box having a lattice structure, through which the descaling fluid can flow.

8. System (2) of any of the preceding claims,
wherein the service device (8) additionally comprises a fresh water tank (16),
wherein the service device (8) comprises a first valve (24) adapted for selectively routing the descaling fluid from the descaling fluid tank (14) or fresh water from the freshwater tank (16) to the service device outlet (18).

9. System (2) of any of the preceding claims,
further comprising a control unit (45) coupled with the pump (26), and
wherein the control unit (45) is adapted to continuously operate the pump (26) for a predetermined amount of time.

10. System (2) of claim 9,
wherein the service device (8) further comprises at least one clogging sensor (46) connected to the control unit (45), and
wherein the control unit (45) is adapted to interrupt the operation of the pump (26) upon a clogging signal from the at least one clogging sensor (46).

11. System (2) of any of the preceding claims,
wherein the descaling fluid tank (14) comprises a citric acid solution.

12. System (2) of any of the preceding claims,
wherein the service device (8) comprises a mobile platform having wheels for moving the service device (8) to a desired operating position.

13. Method for cleaning a waste tank in an aircraft, comprising the steps:
attaching at least one spray nozzle (10) having a spray nozzle head (76) and a spray nozzle inlet (78) to an opening (104, 106, 108) of the waste tank (4) in a substantially fluid-tight manner by means of a first adaptor (12),
coupling the at least one spray nozzle (10) to a service device outlet (18) of a service device (8) or a pump (26), which is in fluid communication with the service device outlet (18), through a first conduit (30),
coupling a service device inlet (20) to a waste tank outlet (34) through a second conduit (38),
continuously circulating a descaling fluid through the service device outlet (18), the first conduit (30), the at least one spray nozzle (10), the waste tank outlet (34), the second conduit (38) and the service device inlet (20) by supplying the descaling fluid from a descaling fluid tank (14) of the service device (8) into the waste tank (4) through the at least one spray nozzle (10) and receiving descaling fluid from the waste tank outlet (34) and feeding it into the descaling fluid tank (14),
wherein the at least one spray nozzle head (76) is adapted for ejecting at least one descaling fluid jet into the waste tank (4).

14. Method according to claim 13, further comprising the steps:
removing fittings (98, 100, 102) from the waste tank as a preparatory step,
placing the fittings (98, 100, 102) into a receptacle, and
placing the receptacle into the interior of the descaling fluid tank (14).

15. Method according to claim 13 or 14, further comprising the steps:
interrupting the circulation of descaling fluid after a predetermined amount of time,
supplying fresh water from a freshwater tank (16) into the waste tank (4), and
receiving resulting rinsing water from the waste tank outlet (34) and feeding it into the descaling fluid tank (14).
